# EUROPÄISCHE PATENTSCHRIFT

(11) **EP 1 226 053 B1**
(45) Veröffentlichungstag und Bekanntmachung des Hinweises auf die Patenterteilung: **08.12.2004**
(21) Anmeldenummer: 01953929.5
(22) Anmeldetag: 17.07.2001
(51) Int. Cl.: B60S 1/34

(54) **SCHEIBENWISCHER**
WIPER
ESSUIE-GLACE

(30) Priorität: 02.08.2000 DE 10037666
(43) Veröffentlichungstag der Anmeldung: 31.07.2002
(73) Patentinhaber: ROBERT BOSCH GMBH, 70442 Stuttgart (DE)
(72) Erfinder: BOHN, Roland, 77815 Buehl (DE); STEIGER, Gerhard, 71679 Asperg (DE)
(86) Internationale Anmeldenummer: PCT/DE2001/002670
(87) Internationale Veröffentlichungsnummer: WO 2002/009987

(56) Entgegenhaltungen:
- DE-A- 4 028 127
- DE-A- 19 633 848
- US-A- 2 609 561
- PATENT ABSTRACTS OF JAPAN vol. 011, no. 098 (M-575), 27. März 1987 (1987-03-27) & JP 61 247543 A (TAKEO ISAKA), 4. November 1986 (1986-11-04)

## Beschreibung

### Stand der Technik

Die Erfindung geht von einem Scheibenwischer nach dem Oberbegriff des Anspruchs 1 aus.

Bekannte Scheibenwischer besitzen einen Wischarm, der aus einem Befestigungsteil und einem über ein Abklappgelenk daran angelenkten Gelenkteil mit einer Wischstange und einem Wischblatt aufgebaut ist. Der Wischarm ist mit seinem Befestigungsteil auf einer Antriebswelle befestigt und wird während der Wischbewegung von dieser angetrieben.

In Verbindung mit Scheibenwischern werden in der Regel Scheibenwaschanlagen verwendet. Sie werden betätigt, wenn die Feuchtigkeit durch Niederschläge nicht ausreicht, um die Fahrzeugscheibe zu säubern. Sie beinhalten einen Wasserbehälter, Spritzdüsen und eine Pumpe, die Wasser, dem unter Umständen Reinigungs- und Antigefriermittel beigemischt sind, mit Druck aus dem Wasserbehälter zu den Spritzdüsen fördert. In der Regel sind die Spritzdüsen an einem Teil einer Fahrzeugkarosserie befestigt, beispielsweise an einer Motorhaube, einem Fensterrahmen oder dgl.

Es ist aus der DE 198 15 171 A1 bekannt, Spritzdüsen als zusätzliche Bauteile am Wischblatt zu befestigen und somit das Waschwasser direkt mit kurzer Strahllänge auf dem Wischfeld zu verteilen. Da das Waschwasser auf einen Bereich in der Nähe des Wischblatts konzentriert ist und durch die Wischbewegung in kürzester Zeit wieder abgewischt wird, ist die Sicht durch das aufgebrachte Waschwasser nur kurzzeitig behindert. Ein Nachteil solcher Systeme ist, daß Witterungseinflüsse, insbesondere Hagel und extreme Sonneneinwirkung die flexiblen Teile dieser Anordnung, die zum Überbrücken der gelenkigen Bereiche zwischen Wischarm und Wischblatt notwendig sind, negativ beeinflussen.

Ferner ist aus der FR 2 646 801 A1 ein Wischarm bekannt, dessen einstückiger Wischarm Spritzdüsen aufweist. Diese werden durch Öffnungen gebildet, die in Längsrichtung an der zur Fahrzeugscheibe weisenden Seite des Wischarms angeordnet sind. Um die Spritzdüsen mit Waschwasser zu versorgen, weist der Wischarm einen zentralen Wasserkanal auf, der im Bereich einer Antriebswelle an einen weiterführenden zentralen Wasserkanal in der Antriebswelle angeschlossen ist.

In einer älteren Patentanmeldung DE 199 04 927.0 ist eine Abdeckkappe beschrieben, die mit einer Antriebswelle drehfest verbunden ist und mindestens eine Spritzdüse aufweist. Die Abdeckkappe ist aus Kunststoff gefertigt, wobei die Spritzdüse in der Abdeckkappe integriert ist. Das Waschwasser wird über einen zentralen Wasserkanal in der Antriebswelle zugeführt. Um die Abdeckkappe mit der Spritzdüse schnell und einfach an die Wasserleitung anzuschließen, besitzt die Antriebswelle an ihrem freien Ende eine Steckverbindung. Diese ist kugelförmig ausgebildet, so dass die Abdeckkappe einfach auf dem Befestigungsteil grob ausgerichtet und mit diesem drehfest verbunden werden kann. Zudem ist die Abdeckkappe formschlüssig auf eine Schraubenmutter zum Befestigen des Befestigungsteils auf der Antriebswelle geklipst. Vorzugsweise wird die Abdeckkappe und die integrierte Spritzdüse so ausgerichtet, dass der Wasserstrahl in Startrichtung vor dem Wischarm auf das Wischfeld trifft. Da das Waschwasser in Spritzrichtung auf dem Wischfeld weiter fließt, sollte der Auftreffpunkt zweckmäßigerweise in der Nähe des Innenkreises des Wischblatts liegen.

Ferner ist bei Scheibenwischern bekannt, das Waschwasser durch eine hohle Antriebswelle zu einer feststehenden Spritzdüse zu führen. Dabei muss der Düsenkörper gegenüber einer Aufnahmebohrung in der Antriebswelle abgedichtet werden. Da sich die abzudichtenden Teile relativ zueinander drehen, werden die Dichtelemente schnell verschlissen. Es kommt zu Leckagen und der Spritzstrahl wird beeinträchtigt.

Aus der DE 40 28 127 A1 ist eine Scheibenreinigungsanlage, insbesondere für Kraftfahrzeuge, mit einer Wischerwelle zum pendelnden Antrieb eines Wischerarms bekannt. Am freien Ende der Wischerwelle ist eine Düse angeordnet, deren im Wesentlichen zylindrischer Düsenkörper starr mit einem Rohr aus Kunststoff verbunden ist, das seinerseits in einer Bohrung der Wischerwelle unbeweglich geführt ist, so dass der Düsenkörper der Drehbewegung der Wischerwelle nicht folgen kann und daher eine ortsfeste und unbewegliche Stellung einnimmt. Der Zwischenraum zwischen dem äußeren Mantel des Rohrs und der Bohrung wird durch eine reibungs- und verschleißbehafteten Abdichteinrichtung abgedichtet, die ein Eindringen von Wasser über den Düsenkörper in die Lagerbuchse verhindert. Der Düsenkörper wird in dem Rohr, über das Waschwasser der Düse zugeführt wird, durch eine Rasteinrichtung gehalten, die mit einem ballig ausgebildeten Rastkörper in eine entsprechende kugelkalottenartige Rastaufnahme eingreift. Im Abstand von diesem Rastkörper steht von der Außenwand des rohrartigen Ansatzes des Düsenkörpers ein umlaufender Dichtwulst der Abdichteinrichtung vor, der mit Presssitz an der Innenwand des Rohrs anliegt. Durch den Rastkörper und die Dichtwulst wird eine verdrehsichere und dichtende Verbindung zwischen dem Düsenkörper und dem Rohr erreicht.

Das Dokument US-A-2 609 561 offenbart den Oberbegriff des Anspruchs 1.

### Vorteile der Erfindung

Nach der Erfindung ist an einer Antriebswelle in dem zentralen Wasserkanal ein Düsenkörper mit einem zylindrischen Ansatz drehfest und dichtend eingesetzt, der in einem nach außen über den Wischarm herausragenden Teil mindestens eine Spritzdüse aufweist und eine Verbindungsbohrung zum zentralen Wasserkanal hat. Da sich der Düsenkörper nicht relativ zur Antriebswelle dreht, verschleißen seine Dichtelemente nicht und es kann mit einfachen Mitteln eine dauerhafte und sichere Abdichtung gewährleistet werden. Außerdem kann für die nicht unmittelbar mit dem Waschwasser in Verbindung stehenden Flächen ein weniger korrosionsbeständiger und billigerer Oberflächenschutz, der keinem mechanischen Verschleiß unterliegt, verwendet werden, beispielsweise galvanisch aufgebrachtes Nickel statt Überzüge durch Nitrocarburieren.

Der Düsenkörper selbst kann zweckmäßigerweise korrosionsbeständig aus Kunststoff hergestellt werden. Er reicht mit seinem zylindrischen Ansatz relativ lang in den zentralen Wasserkanal der Antriebswelle hinein und schützt somit das Innere der Antriebswelle. Am zylindrischen Ansatz des Düsenkörpers können in Längsrichtung weitere Bünde angeformt sein, deren Außendurchmesser zum freien Ende des Ansatzes hin gestaffelt abnehmen. Dadurch wird einerseits eine sichere Abdichtung erreicht, indem der Anpressdruck der Bünde nach außen zunimmt, und andererseits die Montage des Düsenkörpers erleichtert, weil der Düsenkörper zunächst mit einer geringeren Kraft in den zentralen Wasserkanal der Antriebswelle eingesetzt und ausgerichtet werden kann, bevor er in seiner Endlage fixiert wird. Zum Begrenzen des axialen Verschiebewegs besitzt der Düsenkörper am Ende des zylindrischen Absatzes einen Absatz, mit dem er im montierten Zustand an der Stirnseite der Antriebswelle anliegt und so eine definierte axiale Lage zum Wischarm erhält.

Der Düsenkörper weist eine einfache, leicht zu fertigende Form auf. Er wird vorzugsweise mit einem Kunststoffspritzverfahren hergestellt, wobei ein zentraler Wasserkanal und der Kugelsitz für eine bzw. mehrere Spritzdüsen auf einfache Weise ausgeformt werden können. Die Spritzdüse besitzt eine entsprechende kugelförmige Außenkontur und wird im Kugelsitz des Düsenkörpers gehalten. Durch das Verdrehen der Spritzdüse im Kugelsitz kann der Spritzstrahl jederzeit genau justiert werden. Aus optischen und strömungstechnischen Gründen ist die Spritzdüse in die Oberfläche des Düsenkörpers eingelassen.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Teilschnitt durch ein Wischerlager mit einer hohlen Antriebswelle und einem Düsenkörper und
- Fig. 2: eine Variante zu Fig. 1.

### Beschreibung des Ausführungsbeispiels

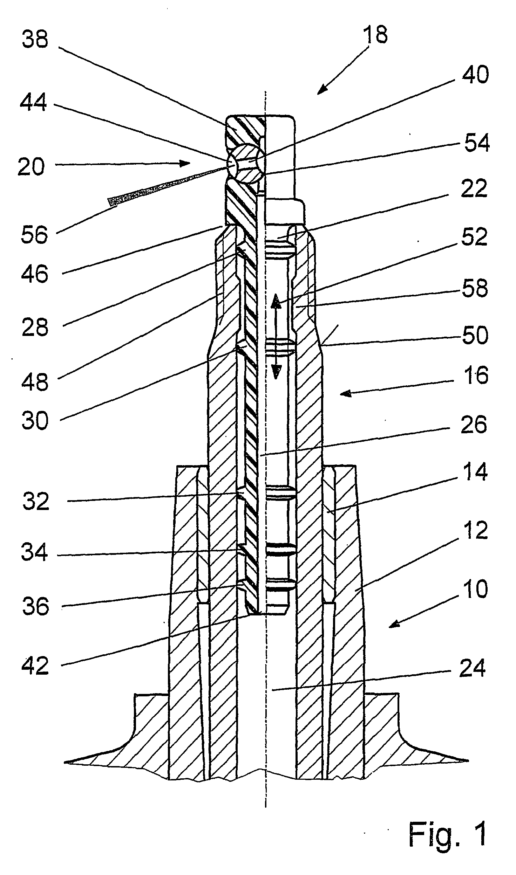

In einem Wischerlager 10 eines Scheibenwischers ist in einem Lagergehäuse 12 über Lagerbüchsen 14 eine Antriebswelle 16 gelagert. Diese ragt mit ihrem freien Ende aus dem Lagergehäuse 12 und besitzt einen Konus 50, auf dem mittels einer Schraubenmutter, die auf einen Gewindeansatz 48 geschraubt wird, ein nicht näher dargestelltes Befestigungsteil eines Wischarms befestigt wird (Fig. 1).

Die Antriebswelle 16 weist einen zentralen, in Längsrichtung 52 verlaufenden Wasserkanal 24 auf, in dessen nach außen weisenden Ende ein zylindrischer Ansatz 22 eines Düsenkörpers 18 einer Scheibenwaschanlage eingesetzt ist. Der zylindrische Ansatz 22 besitzt mehrere angeformte Bünde 28, 30, 32, 34 und 36, die mit Abstand zueinander in Längsrichtung 52 angeordnet sind und dichtend an der Wand des Wasserkanals 24 anliegen. Die Außendurchmesser der Bünde 28 bis 36 nehmen in Längsrichtung 52 zum freien Ende des zylindrischen Ansatzes 22 ab, so dass sich eine nach außen zunehmende Anpresskraft ergibt. Dadurch wird zu Beginn der Montage das Einsetzen und Ausrichten des Düsenkörpers 18 erleichtert, während gegen Ende der Montage durch einen festeren Presssitz die Position gesichert wird. Ein Absatz 46 zwischen dem zylindrischen Ansatz 22 und dem aus der Antriebswelle 16 herausragende Teil 38 des Düsenkörpers 18, der an der Stirnseite der Antriebswelle 16 anliegt, begrenzt den axialen Montageweg. Der zentrale Wasserkanal 24 besitzt im Bereich des freien Endes der Antriebswelle 16 einen Vorsprung 58, der im montierten Zustand des Düsenkörpers 18 zwischen die beiden äußeren Bünde 28 und 30 eingreift und als Abzugssicherung dient.

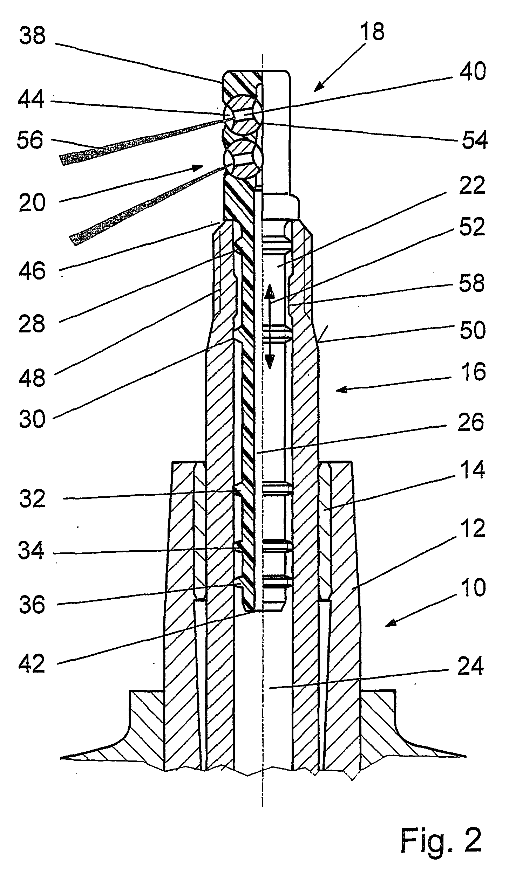

Im herausragenden Teil 38 des Düsenkörpers 18 sind ein oder mehrere (Fig. 2) Spritzdüsen 20 angeordnet, die über einen Verbindungskanal 26 mit einer Öffnung 42 im Düsenkörper 18 an den zentralen Wasserkanal 24 in der Antriebswelle 16 angeschlossen sind. Dabei ist eine Spritzöffnung 44 der Spritzdüse 20 über einen Spritzkanal 40 mit dem Verbindungskanal 26 verbunden. In der Spritzdüse 20 kann ein nicht näher dargestelltes Rückschlagventil integriert sein, so dass die Wasserkanäle 24, 26 nicht leer laufen und Waschwasser erst bei einem vorgegebenen Druck austritt.

Die Spritzdüse 20 ist einstellbar in einem Kugelsitz 54 gelagert, so dass ein Spritzstrahl 56 optimal auf ein nicht dargestelltes Wischfeld des Scheibenwischers ausgerichtet werden kann. Zudem dreht sich die Spritzdüse 20 mit der Schwenkbewegung der Antriebswelle 16, so dass der Spritzstrahl 56 einen großen Teil des Wischfelds erfasst. Vorteilhafterweise ist der Spritzstrahl 56 auf die Startseite des Wischblatts ausgerichtet, damit ein Wischblatt gleich zu Beginn des Wischvorgangs ein benetztes Wischfeld vorfindet.
Durch den zentralen Wasserkanal 24 ergibt sich für die Antriebswelle 16 ein relativ großer Außendurchmesser, ohne dass sich deren Gewicht wesentlich erhöht. Dementsprechend kann auch ein Gewindeansatz 48 am Wellenende vergrößert werden, der zum Befestigen des Wischarms am Wischerlager 10 dient, so dass dieser kritische Bereich.idealerweise verstärkt wird und der Gewindeansatz 48 eine höhere Abreißfestigkeit aufweist. Durch die erfindungsgemäße Wasserführung und Anordnung der Spritzdüse 20 ergibt sich eine einfache, betriebssichere und wirksame Scheibenwaschanlage mit einem guten optischen Eindruck und mit einer gegen Witterungseinflüsse, insbesondere gegen kalten Fahrtwind, geschützten Wasserleitung 24, 26.

## Patentansprüche

1. Scheibenwischer mit einem Wischarm, der auf einer Antriebswelle (16) mit einem zentralen Wasserkanal (24) sitzt, der zu mindestens einer Spritzdüse (20) führt, die sich mit der Schwenkbewegung der Antriebswelle (16) bewegt, **dadurch gekennzeichnet, dass** in dem zentralen Wasserkanal (24) ein Düsenkörper (18) mit einem zylindrischen Ansatz (22) drehfest und dichtend eingesetzt ist, der in einem nach außen über den Wischarm herausragenden Teil (38) mindestens eine Spritzdüse (20) aufweist und einen Verbindungskanal (26, 40) zum zentralen Wasserkanal (24) besitzt.

2. Scheibenwischer nach Anspruch 1, **dadurch gekennzeichnet, dass** der zylindrische Ansatz (22) des Düsenkörpers (18) am Außendurchmesser in Längsrichtung (52) mindestens einen angeformten Bund (28, 30, 32, 34, 36)aufweist, der als Dichtung wirkt.

3. Scheibenwischer nach Anspruch 2, **dadurch gekennzeichnet, dass** in Längsrichtung (52) des Ansatzes (22 )mehrere Bünde (28, 30, 32, 34, 36) vorgesehen sind, die zum freien Ende des Ansatzes (22) hin im Außendurchmesser abnehmen.

4. Scheibenwischer nach Anspruch 3, **dadurch gekennzeichnet, dass** der zentrale Wasserkanal (24) im Bereich des freien Endes der Antriebswelle 16 einen Vorsprung 58 besitzt, der im montierten Zustand des Düsenkörpers 18 zwischen die beiden äußeren Bünde 28 und 30 eingreift und als Abzugssicherung dient.

5. Scheibenwischer nach einem der vorhergehenden Ansprüche, **dadurch gekennzeichnet, dass** sich der herausragende Teil (38) des Düsenkörpers (18) mit einem Absatz (46) an der Antriebswelle (16) abstützt.

6. Scheibenwischer nach einem der vorhergehenden Ansprüche, **dadurch gekennzeichnet, dass** die Spritzdüse (20) mit einem Kugelsitz (54) im Düsenkörper (18) gehalten ist.

7. Scheibenwischer nach Anspruch 6, **dadurch gekennzeichnet, dass** die Spritzdüse (20) einstellbar ist.

8. Scheibenwischer nach Anspruch 6, **dadurch gekennzeichnet, dass** die Spritzdüse (20) in die Oberfläche des Düsenkörpers (18) eingelassen ist.

9. Scheibenwischer nach einem der vorhergehenden Ansprüche, **dadurch gekennzeichnet, dass** der Düsenkörper (18) aus Kunststoff besteht.

## Claims

1. Wiper having a wiper arm which sits on a drive shaft (16) having a central water channel (24) which leads to at least one spray nozzle (20) which moves together with the pivoting movement of the drive shaft (16), **characterized in that** a nozzle body (18) having a cylindrical projection (22) is inserted in a rotationally fixed and sealing manner in the central water channel (24), the nozzle body having at least one spray nozzle (20), in a part (38) which protrudes outwards over the wiper arm, and having a connecting channel (26, 40) to the central water channel (24).

2. Wiper according to Claim 1, **characterized in that** the cylindrical projection (22) of the nozzle body (18) has, on the outside diameter in the longitudinal direction (52), at least one integrally formed collar (28, 30, 32, 34, 36) which acts as a seal.

3. Wiper according to Claim 2, **characterized in that** a plurality of collars (28, 30, 32, 34, 36) are provided in the longitudinal direction (52) of the projection (22) and decrease in outside diameter towards the free end of the projection (22).

4. Wiper according to Claim 3, **characterized in that** the central water channel (24) has, in the region of the free end of the drive shaft (16), a protrusion (58) which, in the fitted state of the nozzle body (18), engages between the two outer collars (28) and (30) serves as a withdrawal safeguard.

5. Wiper according to one of the preceding claims, **characterized in that** the protruding part (38) of the nozzle body (18) is supported on the drive shaft (16) by means of a shoulder (46).

6. Wiper according to one of the preceding claims, **characterized in that** the spray nozzle (20) is held in the nozzle body (18) by means of a spherical seat (54).

7. Wiper according to Claim 6, **characterized in that** the spray nozzle (20) can be adjusted.

8. Wiper according to Claim 6, **characterized in that** the spray nozzle (20) is embedded in the surface of the nozzle body (18).

9. Wiper according to one of the preceding claims, **characterized in that** the nozzle body (18) consists of plastic.

## Revendications

1. Essuie-glace comportant un bras monté sur un arbre d'entraînement (16) ayant un canal d'eau (24) central relié à au moins une buse de pulvérisation (20) se déplaçant avec le mouvement de pivotement de l'arbre d'entraînement (16),
**caractérisé par**
un corps de buse (18) muni d'un prolongement cylindrique (22) logé solidairement en rotation et de manière étanche dans le canal d'eau central (24), ce prolongement comportant, du côté extérieur, dans sa partie (38) dépassant du bras d'essuie-glace, au moins une buse de pulvérisation (20) et un canal de liaison (26, 40) relié au canal d'eau central (24).

2. Essuie-glace selon la revendication 1,
**caractérisé en ce que**
le prolongement cylindrique (22) du corps de buse (18) comporte, sur son diamètre extérieur, dans la direction longitudinale (52), au moins une collerette (28, 30, 32, 34, 36), formée sur ce prolongement et fonctionnant comme joint d'étanchéité.

3. Essuie-glace selon la revendication 2,
**caractérisé par**
plusieurs collerettes (28, 30, 32, 34, 36) prévues dans la direction longitudinale (52) du prolongement (22), et le diamètre extérieur des collerettes augmente dans la direction de l'extrémité libre du prolongement (22).

4. Essuie-glace selon la revendication 3,
**caractérisé en ce que**
le canal d'eau central (24) possède une partie en saillie (58) au niveau de l'extrémité libre de l'arbre d'entraînement (16), cette saillie venant à l'état monté du corps de buse (18) entre les deux collerettes extérieures (28, 30) et servant de moyen de protection contre l'extraction.

5. Essuie-glace selon l'une des revendications précédentes,
**caractérisé en ce que**
la partie en saillie (38) du corps de buse (18) s'appuie contre l'arbre d'entraînement (16) par un épaulement (46).

6. Essuie-glace selon l'une des revendications précédentes,
**caractérisé en ce que**
la buse de pulvérisation (20) est montée dans le corps de buse (18) par l'intermédiaire d'un siège à rotule (54).

7. Essuie-glace selon la revendication 6,
**caractérisé en ce que**
la buse (20) est réglable.

8. Essuie-glace selon la revendication 6,
**caractérisé en ce que**
la buse (20) est insérée dans la surface du corps de buse (18).

9. Essuie-glace selon l'une des revendications précédentes,
**caractérisé en ce que**
le corps de buse (18) est en matière plastique.
